# EUROPEAN PATENT APPLICATION

(11) **EP 4 575 453 A1**
(43) Date of publication of application: **25.06.2025**
(21) Application number: 23220045.1
(22) Date of filing: 22.12.2023
(51) Int. Cl.: G01N 1/28, G01N 35/00, G01N 1/31, G02B 21/26, G02B 21/34, G01N 1/06

(54) **METHOD, COMPUTER PROGRAM AND LABORATORY AUTOMATION DEVICE FOR TREATING TWO OR MORE PROBE SLICES, CONTROLLER FOR CONTROLLING THE LABORATORY AUTOMATION DEVICE, AND COMPUTER-READABLE MEDIUM**

(71) Applicant: Tecan Trading AG, 8708 Männedorf (CH)
(72) Inventor: Mezger, Dominik, 8608 Bubikon (CH); Ott, Philipp, 8496 Steg (CH)
(74) Representative: Sykora & König Patentanwälte PartG mbB

(57) **Abstract**

A method for treating a first probe slice (70) and at least a second probe slice (72) by a laboratory automation device (10) is described. The first probe slice (70) is arranged on a first object slide (54) and the second probe slice (72) is arranged on a second object slide (56). The first and second object slides (54, 56) are arranged on an upper surface (51, 53) of a carrier (50, 52), wherein the upper surface (51, 53) of the carrier (50, 52) defines a plane extending in a first direction (40) and in a second direction (42) perpendicular to the first direction (40). The laboratory automation device (10) comprises a handling system (15) having a treatment arm (20) and first and second treatment tool (30, 32) movably arranged at the treatment arm (20). The method comprises: determining positions of a first area of interest (74) of the first probe slice (70) and of a second area of interest (76) of the second probe slice (72) with respect to the first and second directions (40, 42); generating a handling signal and a movement signal depending on the determined positions of the areas of interest (74, 76); sending the handling signal to the handling system (15), wherein the handling signal and the handling system (15) are configured such that upon receiving the handling signal the handling system (15) moves the first object slide (54) in the first direction (40) until the first area of interest (74) overlaps the second area of interest (76) in the first direction (40); sending the movement signal to the handling system (15), wherein the movement signal and the handling system (15) are configured such that upon receiving the movement signal the handling system (15) moves the treatment arm (20) parallel to the first direction (40) until a first treatment spot (80) of the first treatment tool (30) overlaps the first area of interest (74) in the first direction (40) and a second treatment spot (82) of the second treatment tool (32) overlaps the second area of interest (76) in the first direction (40), moves the first treatment tool (30) in a second direction (42) perpendicular to the first direction (40) until the first treatment spot (80) overlaps the first area of interest (74) in the second direction (42), and moves the second treatment tool (32) parallel to the second direction (42) until the second treatment spot (82) overlaps the second area of interest (76) in the second direction (42); and sending a treatment signal to the handling system (15), wherein the treatment signal and the handling system (15) are configured such that upon receiving the treatment signal the handling system (15) treats the first probe slice (70) in the first area of interest (74) by the first treatment tool (30) and the second probe slice (72) in the second area of interest (76) by the second treatment tool (32).

## Description

### FIELD OF THE INVENTION

The invention relates to a method, a computer program, and a laboratory automation device for treating a first probe slice and at least a second probe slice. The invention further relates to a controller for controlling the laboratory automation device, and to a computer-readable medium on which the computer program is stored.

### BACKGROUND OF THE INVENTION

Laboratory automation devices are used for automating task of a laboratory assistant, which, for example, tests a patient for specific diseases. To this end, a probe of a patient's tissue may be taken. The tissue probe may be sliced in several probe slices. Alternatively, plant material, wood samples, or bone samples, may be sliced in order to provide probe slices to be treated. The probe slices each may be arranged on a corresponding object slide. Then, the probe slices may be automatically treated by a bio-chemical procedure carried out by the laboratory automation device. Such a procedure may consist in various operations like adding substances, incubating, separating, lysing, etc.

It is known to arrange multiple probe slices carrying object slides on a carrier in fixed locations and to process two or more of the probe slices with correspondingly two or more treatment tools in parallel, e.g. simultaneously. To this end, the treatment tools may be arranged at a multi-channel treatment arm comprising several treatment channels, one for each of the treatment tools. It is further known, to arrange correspondingly two or more actuators in the treatment arm and to couple the actuators with the corresponding treatment tools such that the treatment tools may be moved at the treatment arm relative to each other along the treatment arm.

Assuming that the object slides are arranged at fixed positions on a surface of the carrier which defines a plane, e.g. an XY-plane extending in an X-direction and in an Y-direction perpendicular to the X-direction, and that the treatment arm extends in the Y-direction, all treatment tools share the X-coordinate or, in other words, are arranged at the same X-coordinate, because all of the treatment tools are coupled to the treatment arm which extends in the Y-direction only. Moving the treatment arm in the X-direction leads to that the X-coordinate of all treatment tools changes simultaneously about the same amount. Moving the treatment tools individually along the treatment arm by the actuators enables to vary the Y-coordinates of the treatment tools relative to each other, wherein the range in which the Y-coordinates may be varied depends on the position of the corresponding treatment tool at the treatment arm, because the treatment tools cannot overtake each other at the treatment arm. So, the treatment channels at the treatment arm and the treatment tools at the treatment channels are spatially dependent from each other, i.e. a common X-position for all treatment tools.

In general, the positions and orientations of the probe slices on the corresponding object slides with respect to the XY-plane may vary from object slide to object slide. So, a position of an area of interest (Aol) of the tissue probe may also vary from object slide to object slide. The variations in the Y-direction may be compensated by moving the treatment tools relative to each other along the treatment arm. However, the variations in the X-direction cannot be compensated for because of the spatial dependency in the X-direction. In particular, when one of the treatment tools is moved in the X-direction in order to arrive at the Aol of the corresponding probe slice, all other treatment tools of the treatment arm are equivalently moved in the X-direction although the Aols of the corresponding probe slices may have a different position the X-direction. As a result, only one of the probe slices may be treated at a time although the laboratory automation device comprises the multi-channel treatment arm. Thus, the overall throughput is limited.

### DESCRIPTION OF THE INVENTION

It is an objective of the invention to provide a method, a computer program, and a laboratory automation device for treating a first probe slice and at least a second probe slice, which contribute to a high throughput of the laboratory automation device. Further, it is an object of the present invention to provide a controller for the laboratory automation device and a computer-readable medium on which the computer program is stored.

These objectives are achieved by the subject-matter of the independent claims. Further exemplary embodiments are evident from the dependent claims and the following description.

An aspect of the present invention relates to a method for treating a first probe slice and at least a second probe slice by a laboratory automation device. The first probe slice is arranged on a first object slide. The second probe slice is arranged on a second object slide. The first and second object slides are arranged on an upper surface of a carrier. The upper surface of the carrier defines a plane extending in a first direction and in a second direction perpendicular to the first direction. The laboratory automation device comprises a handling system having a treatment arm and first and second treatment tools movably arranged at the treatment arm. The method comprises: determining positions of a first area of interest of the first probe slice and of a second area of interest of the second probe slice with respect to the first and second directions; generating a handling signal and a movement signal depending on the determined positions of the areas of interest; sending the handling signal to the handling system, wherein the handling signal and the handling system are configured such that upon receiving the handling signal the handling system moves the first object slide in the first direction until the first area of interest overlaps the second area of interest in the first direction; sending the movement signal to the handling system, wherein the movement signal and the handling system are configured such that upon receiving the movement signal the handling system moves the treatment arm parallel to the first direction until a first treatment spot of the first treatment tool overlaps the first area of interest in the first direction and a second treatment spot of the second treatment tool overlaps the second area of interest in the first direction, the first treatment tool in a second direction perpendicular to the first direction until the first treatment spot overlaps the first area of interest in the second direction, and the second treatment tool parallel to the second direction until the second treatment spot overlaps the second area of interest in the second direction; and sending a treatment signal to the handling system, wherein the treatment signal and the handling system are configured such that upon receiving the treatment signal the handling system treats the first probe slice in the first area of interest by the first treatment tool and the second probe slice in the second area of interest by the second treatment tool.

Another aspect of the present invention relates to a controller for controlling the laboratory automation device. The controller comprises a memory for storing coordinates, e.g. X- and Y-coordinates, and a processor communicatively coupled to the memory and being configured for carrying out the method as described above and in the following.

Another aspect of the present invention relates to the laboratory automation device for treating the first probe slice and at least the second probe slice. The first probe slice is arranged on the first object slide. The second probe slice is arranged on the second object slide. The first and second object slides are arranged on an upper surface of a carrier. The upper surface of the carrier defines a plane extending in a first direction and in a second direction perpendicular to the first direction. The laboratory automation device comprises: the controller as described above and in the following; the handling system having the treatment arm and the first and second treatment tools movably arranged next to each other at the treatment arm, and being configured to move the first object slide in the first direction until the first area of interest overlaps the second area of interest in the first direction upon receiving the handling signal from the controller, and to move the treatment arm parallel to the first direction until a first treatment spot of the first treatment tool overlaps the first area of interest in the first direction and a second treatment spot of the second treatment tool overlaps the second area of interest in the first direction, to move the first treatment tool in a second direction perpendicular to the first direction until the first treatment spot overlaps the first area of interest in the second direction, and to move the second treatment tool parallel to the second direction until the second treatment spot overlaps the second area of interest in the second direction upon receiving the movement signal from the controller; and to treat the first probe slice in the first area of interest by the first treatment tool and the second probe slice in the second area of interest by the second treatment tool simultaneously upon receiving the treatment signal from the controller.

Another aspect of the present invention relates to a computer program for treating the first probe slice and at least the second probe slice by the laboratory automation device. The computer program, when being executed by the controller of the laboratory automation device, is adapted to carry out the steps of the method as described above and in the following. Optionally, at least a part of the computer program may be executed by another computing device external to the laboratory automation device.

Another aspect of the present invention relates to a computer-readable medium, on which the computer program is stored. The computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. The computer-readable medium may also be a data communication network, e.g. the Internet, which allows downloading a program code. In general, the computer-readable medium may be a non-transitory or transitory medium.

Moving the first object slide such that the first area of interest (Aol) overlaps the second Aol in the first direction leads to that that all Aols of the probe slices to be treated are arranged at the same position with respect to the first direction. Then, all Aols of the probe slices may be treated with the one treatment arm to which the treatment tools are mechanically coupled. So, the above explained disadvantage of the spatial dependency of the treatment tools at the treatment arm are overcome by aligning the object slides individually before treating the corresponding probe slices in the corresponding Aols. So, an object slide handling solution that allows parallel slide processing with a multi-channel treatment arm is provided. This may contribute to a high throughput of the laboratory automation device.

The laboratory automation device may comprise a work bench on which the carrier is arranged. An upper surface of the work bench may be parallel to the upper surface of the carrier. Therefore, the positions of the Aols and/or the treatment spots within the plane defined by the upper surface of the carrier may be easily transferred to the positions of the Aols and/or the treatment spots within a plane defined by the upper surface of the work bench. So, the positions of the Aols may be determined with respect to the carrier or equivalently with respect to work bench. This may be of interest when more than one carrier is arranged on the work bench and/or when the carrier is moved on the workbench between moving the first object slide and treating the probe slices.

The treatment arm may be referred to as multi-channel treatment arm, as multi-channel pipetting arm or as multi-channel lysing arm. The first treatment tool may be arranged at a first treatment channel and the first treatment tool may be arranged the treatment arm via the first treatment channel. The second treatment tool may be arranged at a second treatment channel and the second treatment tool may be arranged at the treatment arm via the second treatment channel. That the first and second treatment tools are movably arranged at the treatment arm may mean that the first and second treatment tools may be moved relative to each other along the treatment arm and thereby in the second direction in which the treatment arm extends. When moving the treatment tools individually relative to each other along the treatment arm in the second direction, the first and second treatment tools may be moved simultaneously or one after the other.

The first probe slice may be treated by the first treatment tool and the second probe slice may be treated by the second treatment tool in parallel, e.g. simultaneously. For example, the treatment of the first and second slices by the corresponding treatment tools may start simultaneously, i.e. at the same time. Alternatively, there might be a small pause between the start of the treatment of the first slice and the start of the treatment of the second slice, wherein the pause may be smaller than a duration which is needed for treating one of the probe slices. For example, a length of the pause may be in the range of some seconds. So, that the first and second treatment tools treat the corresponding probe slice "in parallel" may mean that the treatment of one of the probe slices starts and ends simultaneously with the treatment of the other one of the probe slices, or that a first treatment duration during which the first probe slice is treated overlaps a second treatment duration during which the second probe slice is treated.

That the first Aol overlaps the second Aol "in the first direction" may mean in this context that a projection of the first Aol on a first axis defining the first direction overlaps a projection of the second Aol on the first axis. For example, the first Aol at least approximately completely overlaps the second Aol in the first direction. That the first Aol "at least approximately completely" overlaps the second Aol in the first direction may mean that the first Aol completely overlaps the second Aol in the first direction, or that an overlap area, in which the first Aol overlaps the second Aol in the first direction has a size between 60% and 100%, e.g. between 75% and 100%, e.g. between 90% and 100% of the size of the first or second Aol in the first direction.

That one of the treatment spots overlaps the corresponding area of interest "in the first direction" may mean in this context that a projection of the corresponding treatment spot on the first axis overlaps a projection of the corresponding Aol on the first axis. For example, the corresponding treatment spot at least approximately completely overlaps the corresponding Aol in the first direction. That the treatment spot "at least approximately completely" overlaps the corresponding Aol in the first direction may mean that the corresponding treatment spot completely overlaps the corresponding Aol in the first direction, or that an overlap area, in which the first the treatment spot overlaps the corresponding Aol in the first direction has a size between 60% and 100%, e.g. between 75% and 100%, e.g. between 90% and 100% of the size of the corresponding treatment spot or of the corresponding Aol in the first direction.

That one of the treatment spots overlaps the corresponding area of interest "in the second direction" may mean in this context that a projection of the corresponding treatment spot on the second axis overlaps a projection of the corresponding Aol on the second axis. For example, the corresponding treatment spot at least approximately completely overlaps the corresponding Aol in the second direction. That the corresponding treatment spot "at least approximately completely" overlaps the corresponding Aol in the second direction may mean that the corresponding treatment spot completely overlaps the corresponding Aol in the second direction, or that an overlap area, in which the corresponding treatment spot overlaps the corresponding Aol in the second direction, has a size between 60% and 100%, e.g. between 75% and 100%, e.g. between 90% and 100% of the size of the corresponding treatment spot or of the corresponding Aol in the second direction.

The plane defined by the upper surface of the carrier or of the workbench may be an XY-plane and the first direction may be an X-direction and the second direction may be a Y-direction. In this context, the positions of the Aols with respect to the first and second directions may be given by X- and Y-coordinates.

Optionally, a first center of the first Aol, a second center of the second Aol, and/or centers of one or both of the treatment spots may be determined. Then, in order to achieve the overlap of the first and second Aols in the first direction, the first object slide may be moved in the first direction until the centers of the Aols are aligned with respect to the X-axis, i.e. until coordinates of the centers of the Aols have the same X-coordinate in the XY-plane. Alternatively or additionally, in order to achieve the overlap of the treatment spots and the corresponding Aols in the first direction, the treatment arm may be moved parallel to the first direction until the centers of the treatment spots are aligned with the centers of the corresponding Aols with respect to the X-axis, i.e. until coordinates of the centers of the Aols and of the corresponding treatment spots have the same X-coordinate in the XY-plane. Alternatively or additionally, in order to achieve the overlap of the treatment spots and the corresponding Aols in the second direction, the treatment tools may be moved in the second direction or, respectively, parallel to the second direction until the centers of the treatment spots are aligned with the centers of the corresponding Aols with respect to the Y-axis, i.e. until coordinates of the centers of the treatment spots have the same Y-coordinate in the XY-plane as the centers of the corresponding Aols.

The treatment arm holding the treatment channels and thereby the treatment tools may extend in the second direction such that a position of the treatment spots in the first direction is always the same. In other words, the coordinates of the centers of the treatment spots always have the same X-coordinate in the XY-plane. Therefore, when the Aols are aligned in the first direction and one of the treatment spots is aligned with the corresponding Aol in the first direction, all other ones of the treatment spots are aligned with the corresponding other ones of the Aols automatically.

The handling signal, the movement signal, and optionally the treatment signal may be fused in a common signal, wherein the common signal may be modulated such that the information contained in the handling signal, the movement signal and, respectively, the treatment signal is contained in the common signal.

According to an embodiment of the invention, the method comprises, before determining the positions of the Aols: receiving image data from at least one camera, the image data being representative for the positions of the first probe slice on the first object slide and of the second probe slice on the second object slide; and determining the positions of the areas of interest depending on the received image data. This may contribute to precisely determining the positions of the Aols. Alternatively, the positions of the Aols may be obtained, e.g. fetched, from a database in which the positions of the Aols are stored. The database may be a database of a pathology department. In this case, the positions of the Aols may be determined in advance, e.g. by image analysis or by a laboratory assistant.

According to an embodiment of the invention, the method comprises, before receiving the image data from the at least one camera: sending a capturing signal to the corresponding camera, wherein the capturing signal and the corresponding camera are configured such that the corresponding camera takes at least one image of the first probe slice on the first object slide and/or of the second probe slice on the second object slide and that the corresponding camera generates the image data. This may contribute to precisely determining the positions of the Aols.

The laboratory automation device may comprise one camera for taking images of the first and second probe slices. For example, a field-of-view of the camera is large enough to cover all of the object slides or the camera may be movable such that the field-of-view may be moved over all object slides one after the other. Alternatively, the laboratory automation device may comprise more than one camera, e.g. one camera per object slide, e.g. a first camera for taking a first image of the first probe slice on the first object slide and a second camera for taking a second image of the second probe slice on the second object slide.

The camera(s) each may be configured to generate a corresponding image signal. The image signal(s) may comprise the corresponding image data. That the camera takes "at least one image" of the first probe slice and of the second probe slice may mean that the camera may take only one image from the first and second probe slices or that the camera may take a first image from the first probe slice and a second image from the second probe slice. In any case, the image data may be representative for the corresponding images.

According to an embodiment of the invention, the method comprises, after the handling system has moved the first object slide and before sending the movement signal to the handling system: sending a positioning signal to a positioning unit of the laboratory automation device, wherein the positioning signal and the positioning unit are configured such that upon receiving the positioning signal the positioning unit moves the carrier from a handling area, in which the handling unit system moved the first object slide in the first direction, to a treatment area, in which the handling system can treat the first and second probe slices, in particular via the treatment arm. This may be especially advantageous, when the handling system comprises a handling unit operating in the handling are and a treatment unit comprising the treatment arm and operating in the treatment area. Optionally, the positioning signal may be fused into the above-mentioned common signal, wherein the common handling signal may be modulated such that the information contained in the positioning signal is contained in the common signal.

According to an embodiment of the invention, the first and second treatment tools each are lysis, staining or masking tools, and the handling system treats the first and second probe slices by lysing, staining or masking the first and second probe slices in the corresponding first and second areas of interest by the corresponding lysis, staining or masking tools. Alternatively, the treatment tools may be detachment tools and the probe slices may be detached within the corresponding Aols by the corresponding detachment tools. The staining tools may be used for providing stains, e.g. antibody stains. The masking tools may be used for removing a medium which covers the Aols within the corresponding Aol. For example, the slices may be paraffin embedded and the paraffin may be removed when treating the probe slices. This process may be referred to as spatial deparaffinization. According to an embodiment of the invention, the handling system comprises a handling tool for holding the first object slide, and the handling system and the handling tool are configured such that upon receiving the handling signal the handling tool is moved onto the first object slide, an underpressure is generated between the handling tool and the first object slide such that the first object slide is fixed to the handling tool by the underpressure, the first object slide is lifted and moved by the handling tool until the first area of interest overlaps the second area of interest in the first direction, and the handling tool releases the first object slide by releasing the underpressure between the handling tool and the first object slide. When releasing the underpressure between the handling tool and the first object slide, the first object slide may be arranged on the carrier by the handling tool such that the first object slide does not fall onto the carrier when the underpressure between the handling tool and the first object slide is released. In particular, the first object slide may be arranged on the carrier above a first underpressure port of the carrier by the handling tool before releasing the underpressure between the handling tool and the first object slide such that the first object slide may be held on the carrier by the first underpressure port when the underpressure between the handling tool and the first object slide is released. In this embodiment, the handling tool may be referred to as suction tool.

Alternatively, the handling tool may use a different principle for grabbing and transporting the first probe slice, e.g. a gripping tool. As another alternative, the first object slide may comprise a bar projecting from the first object slide in a direction vertically away from the carrier and the first object slide may be shifted along the first direction via the handling tool, the treatment channel or the treatment tool pressing against the bar in the first direction parallel to the XY-plane without being lifted up from the carrier.

According to an embodiment of the invention, the handling system comprises a handling unit and a treatment unit, the handling unit is configured for moving the first object slide upon receiving the handling signal from the controller, and the treatment unit comprises the treatment arm and is configured for moving the treatment arm and the first and second treatment tools upon receiving the movement signal from the controller and for treating the first probe slice and the second probe slice upon receiving the treatment signal from the controller.

The handling unit may comprise a handling arm, a handling channel, and the handling tool. The handling tool may be mechanically coupled to the handling arm by the handling channel. The handling unit may use the handling arm for moving the handling tool. For example, the handling arm may be moved in the first direction for moving the handling tool and thereby the first object slide held by the handling tool in the first direction. For example, the handling tool comprises or is embodied as a suction tool for holding the first object slide. Alternatively, the handling unit may use the treatment arm for handling the first object slide. In this case, the handling tool may be arranged at the treatment arm. For example, the treatment arm may comprise a handling channel coupling the handling tool to the treatment arm. So, the treatment arm may be coupled to the first object slide by the handling tool. In any case, the laboratory automation device may comprise or may be coupled to a pump being able to generate a pressure below ambient pressure for generating the underpressure between the suction tool and first object slide.

The pump may be the same pump which may be used for a pipetting process which may carried out by the laboratory automation device. Optionally, the pump may also be able to generate a pressure above ambient pressure, e.g. for supplying a medium to probes to be handled by the laboratory automation device.

According to an embodiment of the invention, the laboratory automation device comprises: the at least one camera being communicatively coupled to the controller and being configured for taking the at least one image of the first probe slice on the first object slide and/or of the second probe slice on the second object slide, for generating corresponding image data, and for transferring the image data to the controller.

According to an embodiment of the invention, the laboratory automation device, comprises: a positioning unit being communicatively coupled to the controller and being configured to move the carrier from the handling area, in which the handling unit has moved the first object slide in the first direction, to the treatment area, in which the treatment unit can treat the first and second probe slices, upon receiving the positioning signal from the controller. The positioning unit enables to move the carrier from the handling area to the treatment area. This may be especially advantageous, when the handling system comprises the handling unit and the treatment unit and when the handling unit and the treatment unit are arranged at different positions above the workbench. In an embodiment, in which the handling system does not comprise two different and spatially separated units for handling the object slides and for treating the probe slices, the object slides may be moved and the probe slices may be treated by the treatment arm such that the handling of the object slides and the treatment of the probe slices are carried out in the same common area. In this case, the positioning unit may not be necessary or may be used to transport the carrier to the common area and/or away from the common area.

According to an embodiment of the invention, the laboratory automation device comprises: an underpressure pump for generating an underpressure, wherein the carrier comprises a first underpressure port on which the first object slide is arranged, a second underpressure port on which the second object slide is arranged, a first underpressure terminal coupled to the first underpressure port and to the underpressure pump, and a second underpressure terminal coupled to the second underpressure port and to the underpressure pump. The objects slides may be fixed to the carrier by the underpressure generated by the underpressure pump and supplied to the object slides via the corresponding underpressure terminal and underpressure port. The underpressure terminals may be coupled to the corresponding underpressure ports via corresponding underpressure lines. The underpressure pump may be the pump mentioned above or a separate pump. One or two valves may be arranged between the underpressure ports and the corresponding underpressure terminals, or between the underpressure ports and the underpressure pump. For example, one of the valves may be configured for closing the corresponding underpressure lines such that the underpressure at the underpressure port may be maintained when the underpressure pump is disconnected from the corresponding underpressure lines and the other one of the valves may be configured for releasing the underpressure, e.g. to the ambient air, to be able to disconnect and to remove the corresponding object slide from the carrier.

According to an embodiment of the invention, a third object slide with a third probe slice thereon and a fourth object slide with a fourth probe slice thereon are arranged on the carrier, wherein the third probe slice comprises a third area of interest and the fourth probe slice comprises a fourth area of interest and wherein the laboratory automation device comprises: a first treatment tool row extending along the second direction at the treatment arm and comprising the first and second treatment tools; and a second treatment tool row extending along the second direction at the treatment arm parallel and at a distance to the first treatment tool row and comprising a third treatment tool and a fourth treatment tool, wherein the handling system is configured for treating the third probe slice in the third area of interest by the third treatment tool and the fourth probe slice in the fourth area of interest by the fourth treatment tool upon receiving the treatment signal from the controller.

The second treatment tool row enables to treat the four probe slices in parallel, as explained above with respect to the first and second probe slices only. The third and fourth treatment tools may be arranged along a second common axis. The second common axis may be parallel to the second direction. The second common axis has a predetermined positive distance to the first common axis. All treatment tools being arranged along the second common axis may share the same X-coordinate, which is different from the X-coordinate shared by all treatment tools being arranged along the first common axis.

Before treating the four probe slices in parallel, the third and/or the fourth object slides may be moved by the handling system, in particular by the handling unit, such that the third and fourth Aols overlap each other in the first direction. In particular, the third and/or the fourth object slides may be moved such that centres of the third and/or the fourth Aols are arranged in parallel to the second common axis. In addition, a distance between the first common axis and the second common axis may be considered when moving the third and/or fourth object slide, wherein the third and/or fourth object slide may be moved such that a distance between for example the first and third Aols or the second and the fourth Aols correspond to the distance between the first and second common axis.

It has to be understood that features, advantages and/or embodiments of one of the aspects as described above and in the following may be features of another one of the aspects as described in the above and in the following. However, a repetitive explanation of these features, advantages and embodiments is omitted in order to provide a concise description and in order not to obscure the inventive idea of the present invention.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 shows a perspective view of an exemplary laboratory automation device, according to an embodiment of the invention.
Fig. 2 shows a top view of an example of a carrier on which two object slides are arranged in a first state, according to an embodiment of the invention.
Fig. 3 shows a top view of the carrier of figure 2 in a second state, according to an embodiment of the invention.
Fig. 4 shows a top view of an example of a carrier on which four object slides are arranged, according to an embodiment of the invention.
Fig. 5 shows a detailed view of a treatment arm of a laboratory automation device and of a carrier on which four object slides are arranged, according to an embodiment of the invention.
Fig. 6 shows a flow-chart of a method for treating a first probe slice and at least a second probe slice by a laboratory automation device, according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

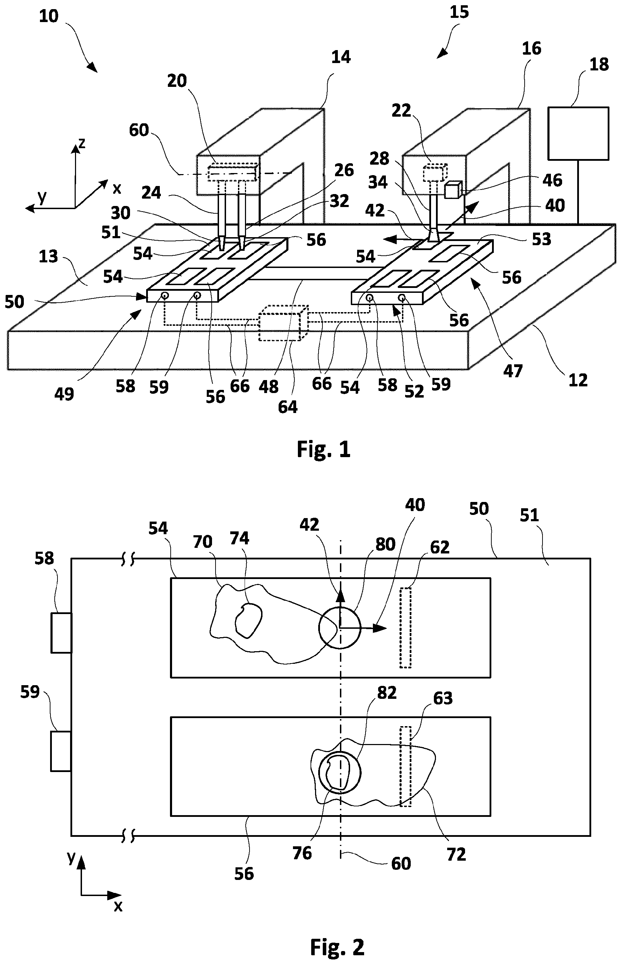

Fig. 1 shows a perspective view of an exemplary laboratory automation device 10, according to an embodiment of the invention, and

Fig. 2 shows a top view of an example of a first carrier 50 on which two object slides, in particular a first object slied 54 and a second object slide 56 are arranged in a first state, according to an embodiment of the invention.

The laboratory automation device 10 may comprise a workbench 12 on which the first carrier 50 and optionally a second carrier 52, basically corresponding to the first carrier 50, is arranged. An upper surface 13 of the work bench 12 may be parallel to an upper surface 51 of the first carrier 50 and/or to an upper surface 53 of the second carrier 52. The upper surface 51 of the carrier 50 defines a plane extending in a first direction 40 and in a second direction 42 perpendicular to the first direction 40. The plane defined by the upper surface 51 of the carrier 50 or of the workbench may be an XY-plane, the first direction 40 may be an X-direction and the second direction 42 may be a Y-direction. Optionally, there may be only one or more than two carriers 50, 52 arranged on the workbench 12.

The laboratory automation device 10 is configured for treating at least a first probe slice 70 and at least the second probe slice 72 in parallel, e.g. simultaneously. The first probe slice 70 is arranged on the first object slide 54. The second probe 72 slice is arranged on the second object slide 56. The first and second object slides 54, 56 are arranged on the upper surface 51 of the carrier 50. The first probe slice 70 comprises a first area of interest (Aol) 74 to be treated and the second probe slice 72 comprises a second Aol 76 to be treated. Optionally, there may be more than one first object slides 54 and/or more than one second object slides 56 arranged on each of the carriers 50, 52. Alternatively or additionally, there may be two or more probe slices 70, 72 on one of the object slides 54, 56, optionally with every probe slice 70, 72 comprising its own Aol 74, 76. In this case, the Aols 74, 76 of the corresponding object slide 54, 56 may be treated one after the other, wherein the corresponding object slide 54, 56 may be moved between these treatments, as explained in the following.

The laboratory automation device 10 comprises a handling system 15 and a controller 18. Optionally, the handling system 15 may comprise a handling unit 16 for handling the object slides 54, 56 and a treatment unit 14 for treating the probe slices 70, 72. Alternatively, the object slides 54, 56 may be handled and the probe slices 70, 72 may be treated by the same unit, e.g. the treatment unit 14.

The handling system 15, in particular the treatment unit 14, comprises a treatment arm 20, a first treatment tool 30 and at least a second treatment tool 32 movably arranged next to each other along the first direction 40 at the treatment arm 20. The treatment arm 20 may be referred to as multi-channel treatment arm, as multi-channel pipetting arm or as multi-channel lysing arm. The first treatment tool 30 may be arranged at a first treatment channel 24 and the first treatment tool 30 may be arranged the treatment arm 20 via the first treatment channel 24. The second treatment tool 32 may be arranged at a second treatment channel 26 and the second treatment tool 32 may be arranged at the treatment arm 20 via the second treatment channel 26. The treatment unit 14 may comprise more than two treatment tools 30, 32, e.g. four or eight, coupled to the treatment arm 20 via correspondingly more treatment channels 24, 26. The first and second treatment tools 30, 32 may be arranged at the treatment arm 20 along a first common axis 60. The first common axis 60 is oriented parallel to the Y-direction. Therefore, all treatment tools 30, 32 being arranged along the first common axis 60 have the same X-coordinate.

Each of the treatment tools 30, 32 comprises a corresponding treatment spot in which the treatment tool 30, 32 may treat the Aol 74, 76 of the corresponding probe slice 70, 72. In particular, the first treatment tool 30 comprises a first treatment spot 80 in which the first Aol 74 may be treated by the first treatment tool 30 and the second treatment tool 32 comprises a second treatment spot 82 in which the second Aol 76 may be treated by the second treatment tool 32. The treatment arm 20 holding the treatment channels 24, 26 and thereby the treatment tools 30, 32 may extend in the second direction 42 such that positions of the treatment spots 80, 82 in the first direction 40 are always the same. In other words, XY-coordinates of the centres of the treatment spots 80, 82 always have the same X-coordinate in the XY-plane. In particular, centres of the treatment spots 80, 82 may be aligned in parallel to the first common axis 60, in particular along a projection of the first common axis 60 on the carrier 50. The treatment spots 80, 82 may have the same size or may have different sizes. The size of the treatment spots 80, 82 may depend on the corresponding treatment tool 30, 32.

The handling unit 16 may comprise a handling arm 22, a handling channel 28, and a handling tool 34. The handling tool 34 may be mechanically coupled to the handling arm 22 by the handling channel 28. The handling unit 16 may use the handling arm 22 for moving the handling tool 34. For example, the handling arm may be moved in the first direction 40 for moving the handling tool 34 and thereby the first object slide 54 held by the handling tool 34 in the first direction 40. For example, the handling tool 34 may comprise or may be embodied as a suction tool for holding the first object slide 54. Alternatively, in case of the handling system 15 comprising the handling unit 16 only, the handling unit 16 may use the treatment arm 20 for handling the first object slide 54. In this case, the handling tool 34 may be arranged at the treatment arm 20 and the treatment arm 20 may be arranged in the handling unit 16. For example, in this case, the treatment arm 20 may comprise the handling channel 28 coupling the handling tool 34 to the treatment arm 20. So, the treatment arm 20 may be coupled to the first object slide 54 by the handling tool 34. In any case, the laboratory automation device 20 may comprise or may be coupled to an underpressure pump 64 for generating an underpressure between the suction tool and the first object slide 54.

The underpressure pump 64 may be configured for generating the underpressure. For example, the carriers 50, 52 each may comprise a first underpressure port 62 on which the first object slide 54 is arranged, a second underpressure port 63 on which the second object slide 56 is arranged, a first underpressure terminal 58 coupled to the first underpressure port 62 and to the underpressure pump 64, and a second underpressure terminal 59 coupled to the second underpressure port 63 and to the underpressure pump 64. The objects slides 54, 56 may be fixed to the corresponding carrier 50, 52 by the underpressure generated by the underpressure pump 64 and supplied to the object slides 54, 56 via the corresponding underpressure terminal 58, 59 and underpressure port 62, 63. The underpressure terminals 58, 59 may be coupled to the corresponding underpressure ports 62, 63 via corresponding underpressure lines (not shown) within the corresponding carrier 50, 52.

The laboratory automation device 10 may comprise at least one camera 46 being communicatively coupled to the controller 18 and being configured for taking at least one image of the first probe slice 70 on the first object slide 54 and/or of the second probe slice 72 on the second object slide 56, for generating corresponding image data, and for transferring the image data to the controller 18. For example, a field-of-view of the camera 46 may be large enough to cover all of the object slides 54, 56 or the camera 46 may be movable such that the field-of-view may be moved over all object slides 54, 56 one after the other. Alternatively, the laboratory automation device 10 may comprise more than one camera 46, e.g. one camera 46 per object slide 54, 56 (not shown), e.g. a first camera for taking a first image of the first probe slice 70 on the first object slide 54 and a second camera for taking a second image of the second probe slice 72 on the second object slide 56.

The camera(s) 46 each may be configured to generate a corresponding image signal. The image signal(s) may comprise the corresponding image data. That the camera 46 takes "at least one image" of the first probe slice 70 and of the second probe slice 72 may mean that the camera 46 may take only one image from the first and second probe slices 70, 72 or that the camera 46 may take a first image from the first probe slice 70 and a second image from the second probe slice 72. In any case, the image data may be representative for the corresponding images.

The laboratory automation device 10 may comprise a positioning unit 48 being communicatively coupled to the controller 18 and being configured to move the carriers 50, 52 from a handling area 47, in which the handling unit 16 can move one of the first object slides 54 in the first direction 40, to a treatment area 49, in which the treatment unit 14 can treat the first and second probe slices 54, 56, upon receiving a corresponding positioning signal from the controller 18. The positioning unit 48 may be especially advantageous, when the handling system 15 comprises the handling unit 16 and the treatment unit 14 and when the handling unit 16 and the treatment unit 14 are arranged at different positions above the workbench 12, as shown in figure 1. In another embodiment, in which the handling system 15 does not comprise two different and spatially separated units for handling the object slides 54, 56 and for treating the probe slices 70, 72, the object slides 54, 56 may be moved and the probe slices 70, 72 may be treated by the treatment arm 20 such that the handling of the object slides 54, 56 and the treatment of the probe slices 70, 72 may be carried out in the same common area. In this case, the positioning unit 48 may not be necessary or may be used to transport the carriers 50, 52 to the common area and/or away from the common area.

For example, the first and second treatment tools 30, 32 each may be lysis tools, and the handling system 15 treats the first and second probe slices 70, 72 by lysing the first and second probe slices 70, 72 in the corresponding first and second Aols 74, 76 by the corresponding lysis tools. When lysing the first and second probe slices 70, 72, cell membranes of the cells of the probe slices 70, 72 within the corresponding Aols 74, 76 may be broken down for making nucleic acids (DNA or RNA) or proteins accessible for their extraction. Afterwards, these extracts may be purified and analyzed in downstream processes.

Alternatively, the first and second treatment tools 30, 32 may be staining or masking tools. The staining tools may be used for providing stains, e.g. antibody stains. The masking tools may be used for removing a medium which covers or soaks the Aols 74, 76 from the corresponding Aol 74, 76. For example, the probe slices 70, 72 may be embedded in paraffin and the paraffin may be removed when treating the probe slices 74, 76. This process may be referred to as spatial deparaffinization. Alternatively, the treatment tools may be detachment tools and the probe slices 70, 72 may be detached within the corresponding Aols 74, 76 by the corresponding detachment tools.

The handling unit 16 is configured for moving the first object slide 54 upon receiving a handling signal from the controller 18. The treatment unit 14 comprising the treatment arm 20 is configured for moving the treatment arm 20 and the first and second treatment tools 30, 32 upon receiving a movement signal from the controller 18 and for treating the first probe slice 70 and the second probe slice 72 upon receiving a treatment signal from the controller 18.

In particular, the handling unit 16 may be configured to move the first object slide 54 in the first direction 40 until the first Aol 74 overlaps the second Aol 76 in the first direction 40 upon receiving the handling signal from the controller 18. The treatment unit 14 may be configured, upon receiving the movement signal from the controller 18: to move the treatment arm 20 parallel to the first direction 40 until the first treatment spot 80 of the first treatment tool 30 overlaps the first Aol 74 in the first direction 40 and the second treatment spot 82 of the second treatment tool 32 overlaps the second Aol 76 in the first direction 40; to move the first treatment tool 30 in the second direction 42 perpendicular to the first direction 40 until the first treatment spot 80 overlaps the first Aol 74 in the second direction 42; and to move the second treatment tool 32 parallel to the second direction 42 until the second treatment spot 82 overlaps the second Aol 76 in the second direction 42. When the Aols 74, 76 are aligned in the first direction 40 and one of the treatment spots 80, 82 is aligned with the corresponding Aol 74, 76 in the first direction 40, all other ones of the treatment spots 80, 82 are aligned with the corresponding other ones of the Aols 74, 76 automatically. When moving the treatment tools 30 individually relative to each other along the treatment arm 20 in the second direction 42, the first and second treatment tools 30, 32 may be moved simultaneously or one after the other.

In addition, the treatment unit 14 may be configured to treat the first probe slice 70 in the first Aol 74 by the first treatment tool 30 and the second probe slice 72 in the second Aol 76 by the second treatment tool 32 in parallel, e.g. simultaneously, upon receiving the treatment signal from the controller 18.

Because of the upper surface 13 of the work bench 12 being parallel to the upper surfaces 51, 53 of the carriers 50, 52, positions of the Aols 74, 76 and/or the treatment spots 80, 82 within the plane defined by the upper surfaces 51, 53 of the carriers 50, 52 may be easily transferred to the positions of the Aols 74, 76 and/or the treatment spots 80, 82 within a plane defined by the upper surface 13 of the work bench 12. So, the positions of the Aols 74, 76 may be determined with respect to the corresponding carrier 50, 52 or equivalently with respect to the work bench 12. In this context, the positions of the Aols 74, 76 with respect to the first and second directions 40, 42 may be given by corresponding X- and Y-coordinates.

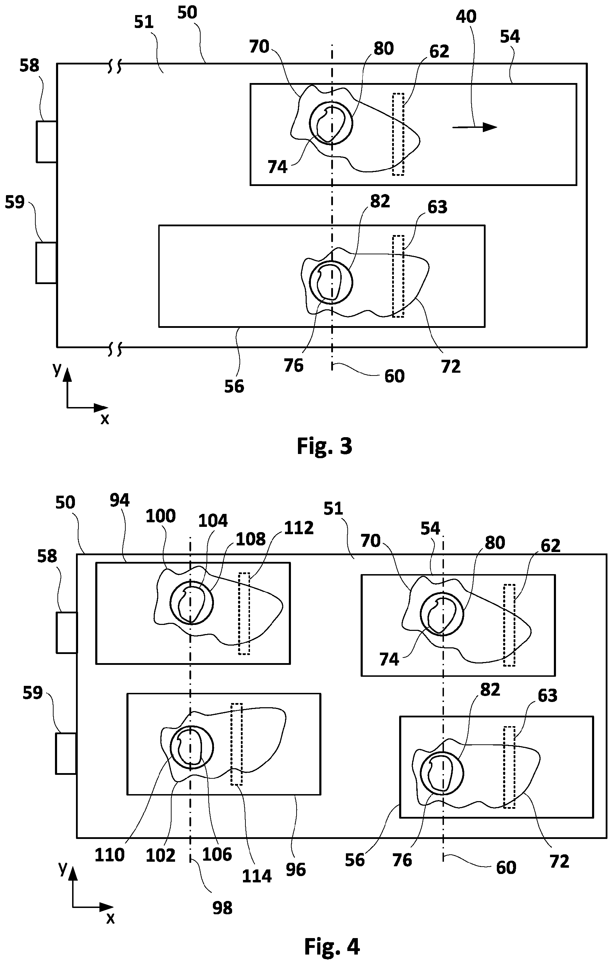

The controller 18 may be configured for controlling the laboratory automation device 10. The controller 18 may comprise a memory (not shown) for storing coordinates, e.g. the X- and Y-coordinates, and a processor (not shown) communicatively coupled to the memory and being configured for carrying out the method as described in the following with respect to figures 3 and 4.

Optionally, only one or three or more of the carriers 50, 52 may be arranged on the workbench 12. Alternatively or additionally, more or less object slides 54, 56 may be arranged on each of the carriers 50, 52. For example, the object slides 54, 56 are arranged in rows and columns on the carriers 50, 52. For example, in the embodiment shown in figure 1, two rows and two lines of object slides 54, 56 are arranged on each of the carriers 50, 52. The treatment unit 14 may comprise as many treatment tools 30, 32 as many columns of object slides 54, 56 there are so that each row of object slides 54, 56 may be treated in parallel, e.g. simultaneously, by the corresponding treatment tools 30, 32. In case of more than two columns of object slides 54, 56 on each of the carriers 50, 52, the treatment unit 14 may comprise correspondingly less or more treatment tools 30, 32.

Fig. 3 shows a top view of one of the carriers 50, 52, e.g. the first carrier 50, of figure 2 in a second state, according to an embodiment of the invention. In the second state, the first object slide 54 has been moved relative to the second object slide 56 and relative to the first carrier 50, and the treatment tools 30, 32 have been moved relative to the first carrier 50.

In particular, the first object slide 54 has been moved such that the first Aol 74 overlaps the second Aol 76 in the first direction 40, in particular such that centers of the first and second Aols 74, 76 are arranged along the projection of the first common axis 60 onto the carrier 50 and as such have the same X-coordinate. For example, the first Aol 74 at least approximately completely overlaps the second Aol 76 in the first direction 40. For example, the first Aol 74 completely overlaps the second Aol 76 in the first direction 40. Alternatively, an overlap area, in which the first Aol 74 overlaps the second Aol 76 in the first direction 40 may have a size between 60% and 100%, e.g. between 75% and 100%, e.g. between 90% and 100% of the size of the first or second Aol 74, 76 in the first direction.

Further, the treatment tools 30, 32 have been moved such that their treatment spots 80, 82 overlap the corresponding Aol 74, 76 in the first direction 40, in particular such that centers of the treatment spots 80, 82 and of the corresponding first and second Aols 74, 76 are arranged on the common axis 60 and have the same X-coordinate. For example, the corresponding treatment spot 80, 82 at least approximately completely overlaps the corresponding Aol 74, 76 in the first direction 40. For example, the corresponding treatment spot 80, 82 completely overlaps the corresponding Aol 74, 76 in the first direction 40. Alternatively, an overlap area, in which the treatment spots 80 overlap the corresponding Aols 74, 76 in the first direction 40 has a size between 60% and 100%, e.g. between 75% and 100%, e.g. between 90% and 100% of the size of the corresponding treatment spot 80, 82 or of the corresponding Aol 74, 76 in the first direction 40.

In addition, the treatment tools 30, 32 have been moved such that their treatment spots 80, 82 overlap the corresponding Aol 74, 76 in the second direction 42. For example, the treatment spots 80, 82 at least approximately completely overlap the corresponding Aol 74, 76 in the second direction 42. For example, the treatment spots 80, 82 completely overlap the corresponding Aol 74, 76 in the second direction 42. Alternatively, an overlap area, in which each of the treatment spots 80, 82 overlap the corresponding Aol 74, 76 in the second direction 42, has a size between 60% and 100%, e.g. between 75% and 100%, e.g. between 90% and 100% of the size of the corresponding treatment spot 80, 82 or of the corresponding Aol 74, 76 in the second direction 42.

Moving the first object slide 54 such that the first Aol 74 overlaps the second Aol 76 in the first direction 40 leads to that that all Aols 74, 76 of the probe slices 70, 72 to be treated are arranged at the same position with respect to the first direction 40. Then, all Aols 74, 76 of the probe slices 54, 56 may be treated with the one treatment arm 20 to which the treatment tools 30, 32 are mechanically coupled, e.g. in parallel, e.g. simultaneously.

Fig. 4 shows a top view of an example of a carrier 50 on which four object slides 54, 56, 94, 96 are arranged, according to an embodiment of the invention. The carrier 50 and the first and second object slides 54, 56 correspond to the carrier 50 and, respectively, the first and second object slides 54, 56 described above.

A third object slide 94 with a third probe slice 100 thereon and a fourth object slide 96 with a fourth probe slice 102 thereon may be arranged on the carrier 50. The third probe slice 100 may comprise a third Aol 104 and the fourth probe slice 102 may comprise a fourth Aol 106.

Positions at which the third and fourth probe slices 100, 102 are arranged with respect the corresponding object slides 94, 96 and/or positions at which the corresponding Aols 104, 106 are located with respect to the corresponding probe slices 100, 102 may differ from the positions of the first and second probe slices 70, 72 with respect to the first and, respectively, second object slides 54, 56 and/or, from the positions of the first and second Aols 74, 76 with respect to the corresponding first and, respectively, second probe slices 70, 72. The positions of the third and fourth Aols 104, 106 with respect to the first and second directions 40, 42 may be determined by the image data being representative for the positions of the third and fourth probe slices 100, 102 on the corresponding object slides 94, 96 and by determining the positions of the third and fourth areas of interest 104, 106 depending on the image data, as explained above with respect to the positions of the first and second Aols 74, 76.

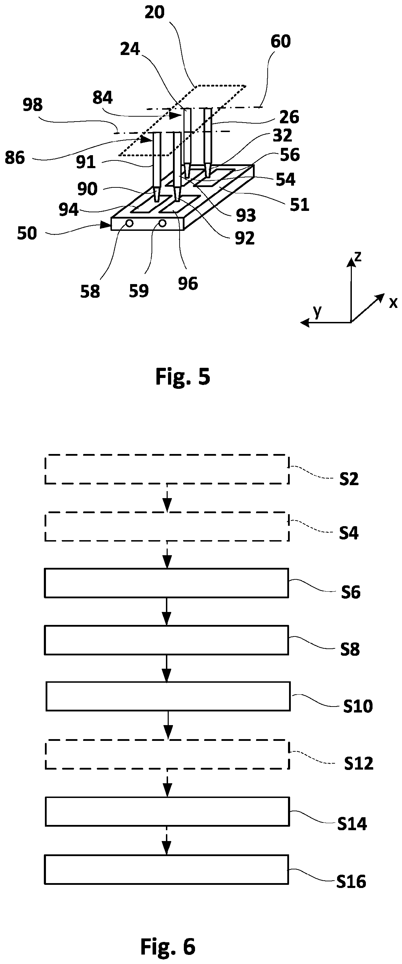

Before treating the four probe slices 54, 56, 94, 96 in parallel, the third and/or the fourth object slides 94, 96 may be moved by the handling system 15, in particular by the handling unit 16, such that the third and fourth Aols 104, 106 overlap each other in the first direction 40, as explained above with respect to the first and second Aols 74, 76. In particular, the third and/or the fourth object slides 94, 96 may be moved such that centres of the third and/or the fourth Aols 104, 106 are arranged along a projection of a second common axis 98 onto the carrier 50, wherein the second common axis 98 is explained below with respect figure 5. In addition, a distance between the first common axis 60 and the second common axis 98 may be considered when moving the third and/or fourth object slides 94, 96, wherein the third and/or fourth object slide 94, 96 may be moved such that a distance between for example the first and third Aols 74, 104 or the second and the fourth Aols 76, 106 correspond to the distance between the first and second common axis 60, 98, e.g. such that the first and third Aols 74, 104, and/or the second and the fourth Aols 76, 106 may be treated in parallel.

The third object slide 94 may be arranged on a third underpressure port 112. The fourth object slide 96 may be arranged on a fourth underpressure port 114. The third underpressure port 112 may be configured to hold the third object slide 94 on the carrier 50, in particular before or after moving the third object slide 94 with respect to the carrier 50. The fourth underpressure port 114 may be configured to hold the fourth object slide 96 on the carrier 50, in particular before or after moving the fourth object slide 96 with respect to the carrier 50.

The third underpressure port 112 may be coupled to the first underpressure terminal 58 for being supplied with the underpressure, wherein one or two further valves may be arranged to decouple the first underpressure port 62 from the third underpressure port 112, when necessary. Alternatively, a separate underpressure terminal (not shown) may be provided for supplying the underpressure to the third underpressure port 112. The fourth underpressure port 114 may be coupled to the second underpressure terminal 59 for being supplied with the underpressure, wherein one or two further valves (not shown) may be arranged to decouple the second underpressure port 64 from the fourth underpressure port 114, when necessary. Alternatively, a separate underpressure terminal (not shown) may be provided for supplying the underpressure to the fourth underpressure port 114.

A functionality of the third and fourth underpressure ports 112, 114 may basically correspond to the functionality of the first and second underpressure ports 62, 64, as explained above and in the following.

Fig. 5 shows a detailed view of a treatment arm 20 of a laboratory automation device 10 and of a carrier 50 on which four object slides 54, 56, 94, 96 are arranged, according to an embodiment of the invention. The treatment arm 20 and thereby the laboratory automation device 10 may widely correspond to the treatment arm 20 and, respectively, the laboratory automation device 10 as explained above. Therefore, in order to provide a concise description, only those features of the treatment arm 20 and thereby the laboratory automation device 10 are described in the following in which the treatment arm 20 and thereby the laboratory automation device 10, differ from the treatment arm 20 and, respectively, the laboratory automation device 10 as explained above. The laboratory automation device 10, in particular the handling system 15, in particular the treatment unit 14 may comprise a first treatment tool row 84 and a second treatment tool row 86. The first treatment tool row 86 may extend along the first common axis 60 and the second treatment tool row 88 may extend along the second common axis 98. The first common axis 60 has a given distance to the second common axis 98 in the first direction 40. The first treatment tool row 84 may extend along the second direction 42 at the treatment arm 20. The first treatment tool row 84 may comprise the first and second treatment tools 30, 32. The second treatment tool row 86 may extend along the second direction 42 at the treatment arm 20 in parallel to the first treatment tool row 84 and at a given distance larger zero to the first treatment tool row 84. The second treatment tool row 86 may comprise a third treatment tool 90 and a fourth treatment tool 92. The third treatment tool 90 may be coupled to the treatment arm 20 via a corresponding third treatment channel 91. The fourth treatment tool 92 may be coupled to the treatment arm 20 via a corresponding fourth treatment channel 93.

The handling system 15 may be configured for treating the third probe slice in the third area of interest by the third treatment tool 90 and the fourth probe slice in the fourth area of interest by the fourth treatment tool 92 upon receiving the treatment signal from the controller 18.

The handling system 15 may also be configured for moving the third and/or fourth object slide 94, 96 parallel to the first direction 40 before treating the third and fourth probe slices. For example, the third and/or fourth object slide 94, 96 may be moved such that the third and fourth Aols overlap each other in the first direction 40, as explained above with respect to the first and second Aols 74, 76. Additionally, third and/or fourth object slide 94, 96 may be moved such that a distance of the first and second Aols 74, 76 to the third and fourth Aols in the first direction 40 corresponds to a distance of the first treatment tool row 84 to the second treatment tool row 86 in the first direction 40 such that all four Aols 74, 76 may be treated in parallel, e.g. simultaneously. The third and fourth treatment tools 92, 94 may be correspondingly moved by the treatment arm 20 upon the handling system 15 receiving the correspondingly configured movement signal, e.g. from the controller 18.

Fig. 6 shows a flow-chart of a method for treating the first probe slice 70 and at least the second probe slice 72 by the laboratory automation device 10, according to an embodiment of the invention.

In an optional step S2, image data may be received from the at least one camera 46. The image data may be representative for the positions of the first probe slice 70 on the first object slide 54 and of the second probe slice 72 on the second object slide 56.

In an optional step S4, a capturing signal may be sent to the camera 46, wherein the capturing signal and the camera 46 may be configured such that the camera 46 takes the at least one image of the first probe slice 70 on the first object slide 54 and/or of the second probe slice 72 on the second object slide 56 and that the camera 46 generates the image data.

In a step S6, positions of the first Aol 74 of the first probe slice 70 and of the second Aol 76 of the second probe slice 72 are determined with respect to the first and second directions 40, 42, e.g. depending on the received image data. Optionally, a first center of the first Aol 74 and a second center of the second Aol 76 may be determined for that purpose.

In a step S8 a handling signal and a movement signal may be determined depending on the determined positions of the Aols 74, 76, wherein the handling signal and a movement signal may be determined simultaneously or one after the other.

In a step S10, the handling signal may be sent to the handling system 15. The handling signal and the handling system 15 are configured such that upon receiving the handling signal the handling system 15 moves the first object slide 54 in the first direction 40 until the first Aol 74 overlaps the second Aol 76 in the first direction 40, e.g. by the handling unit 16 in case of the handling system 15 comprising the handling unit 16. In particular, the handling system 15 and the handling tool 34 are configured such that upon receiving the handling signal the handling tool 34 is moved onto the first object slide 54, an underpressure is generated between the handling tool 34 and the first object slide 54 such that the first object slide 54 is fixed to the handling tool 34 by the underpressure, the first object slide 54 is lifted and moved by the handling tool 34 until the first Aol 74 overlaps the second Aol 76 in the first direction 40, and the handling tool 34 releases the first object slide 54 by releasing the underpressure between the handling tool 34 and the first object slide 54. In this embodiment, the handling tool 34 may be embodied as suction tool. Alternatively, a different tool may be used for grabbing and transporting the first probe slice 54, e.g. a gripping tool.

The handling tool 34 may arrange the first object slide 54 on the carrier 50 before releasing the first object slide 54 by releasing the underpressure between the handling tool 34 and the first object slide 54. In addition, after arranging the first object slide 54 on the carrier 50 and before releasing the underpressure between the handling tool 34 and the first object slide 54, the underpressure from the underpressure pump 64 may be supplied to the object slides 54, 56 via the corresponding underpressure terminal 58, 59 and underpressure port 62, 63 to fix the first object slide 54 to the carrier 50 before releasing the underpressure between the handling tool 34 and the first object slide 54.

In case of the centers of the Aols 74, 76 having been determined in step S6, in order to achieve the overlap of the first and second Aols 74, 76 in the first direction 40, the first object slide 54 may be moved in the first direction 40 until the centers of the Aols 74, 76 are aligned with each other with respect to the X-axis, i.e. until the coordinates of the centers of the Aols 74, 76 have the same X-coordinate in the XY-plane. Alternatively or additionally, in order to achieve the overlap of the treatment spots 80, 82 and the corresponding Aols 74, 76 in the first direction 40, the treatment arm 20 may be moved parallel to the first direction 40 until centers of the treatment spots 80, 82 are aligned with the centers of the corresponding Aols 74, 76 with respect to the X-axis, i.e. until coordinates of the centers of the Aols 74, 76 and of the corresponding treatment spots 80, 82 have the same X-coordinate in the XY-plane. Alternatively or additionally, in order to achieve the overlap of the treatment spots 80, 82 and the corresponding Aols 74, 76 in the second direction 42, the treatment tools 30, 32 may be moved in the second direction 42 or, respectively, parallel to the second direction 42 until the centers of the treatment spots 80, 82 are aligned with the centers of the corresponding Aols 74, 76 with respect to the Y-axis, i.e. until coordinates of the centers of the treatment spots 80, 82 have the same Y-coordinate in the XY-plane as the centers of the corresponding Aols 74, 76.

In this context it has to be mentioned that the centers of the treatment spots 80, 82 are generally known to the controller 18, because the positions of the treatment tools 30, 32 comprising the treatment spots 80, 82 are known and because the treatment spots 80, 82 cannot be moved with respect to the corresponding treatment tools 30, 32. For example, an X-coordinate of one of the treatment spots 80, 82 may always be the same as the X-coordinate of the corresponding treatment tool 30, 32.

An optional step S12 may be carried out when the handling system 15 comprises the handling unit 16 and the treatment unit 14, and when the handling area 47 in which the handling unit 16 can handle the first object slide 54 and the treatment area 49 in which the treatment unit 14 can treat the probe slices 70, 72 are separated from each other. In step S12, the positioning signal may be sent to the positioning unit 48 of the laboratory automation device 10. The positioning signal and the positioning unit 48 may be configured such that upon receiving the positioning signal the positioning unit 48 moves the corresponding carrier 50, 52 from the handling area 47, in which the handling unit 16 moved the first object slide 54 in the first direction 40, to the treatment area 49, in which the treatment unit 14 can treat the first and second probe slices 70, 72, in particular via the treatment arm 20. Optionally, the positioning signal may be fused into the above-mentioned common signal, wherein the common handling signal may be modulated such that the information contained in the positioning signal is contained in the common signal.

In a step S14, the movement signal may be sent to the handling system 15, in particular to the treatment unit 14. The movement signal and the handling system 15, in particular the treatment unit 14, may be configured such that upon receiving the movement signal the handling system 15, in particular the treatment unit 14, moves the treatment arm 20 parallel to the first direction 40 until the first treatment spot 80 of the first treatment tool 30 overlaps the first Aol 74 in the first direction 40 and the second treatment spot 82 of the second treatment tool 32 overlaps the second Aol 76 in the first direction 40, moves the first treatment tool 30 in the second direction 42 perpendicular to the first direction 40 until the first treatment spot 80 overlaps the first Aol 74 in the second direction 42, and moves the second treatment tool 32 parallel to the second direction 42 until the second treatment spot 82 overlaps the second Aol 76 in the second direction 42.

In a step S16, a treatment signal may be sent to the handling system 15, in particular to the treatment unit 14. The treatment signal and the handling system 15, in particular the treatment unit 14, may be configured such that upon receiving the treatment signal the handling system 15, in particular the treatment unit 14, treats the first probe slice 54 in the first Aol 74 by the first treatment tool 30 and the second probe slice 56 in the second Aol 76 by the second treatment tool 32, e.g. in parallel, e.g. simultaneously.

The handling signal, the movement signal, and optionally the treatment signal may be fused in the common signal, wherein the common signal may be modulated such that the information contained in the handling signal, the movement signal and, respectively, the treatment signal is contained in the common signal.

A computer program for treating the first probe slice 54 and at least the second probe slice 56 by the laboratory automation device 10 may be configured such that, when being executed by the controller 18 of the laboratory automation device 10, carries out the above steps of the method. Optionally, at least a part of the computer program may be executed by another computing device external to the laboratory automation device 10.

The computer program may be stored on a computer-readable medium. The computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. The computer-readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: laboratory automation device
- 12: workbench
- 13: upper surface of the workbench
- 14: treatment unit
- 15: handling system
- 16: handling unit
- 18: controller
- 20: treatment arm
- 22: handling arm
- 24: first treatment channel
- 26: second treatment channel
- 28: handling channel
- 30: first treatment tool
- 32: second treatment tool
- 34: handling tool
- 40: first direction
- 42: second direction
- 46: camera
- 47: handling area
- 48: positioning unit
- 49: treatment area
- 50: first carrier
- 51: first upper surface
- 52: second carrier
- 53: second upper surface
- 54: first object slide
- 56: second object slide
- 58: first underpressure terminal
- 59: second underpressure terminal
- 60: first common axis
- 62: first underpressure port
- 63: second underpressure port
- 64: underpressure pump
- 66: air channel
- 70: first probe slice
- 72: second probe slice
- 74: first area of interest
- 76: second area of interest
- 80: first treatment spot
- 82: second treatment spot
- 84: first treatment tool row
- 86: second treatment tool row
- 90: third treatment tool
- 91: third treatment channel
- 92: fourth treatment tool
- 93: fourth treatment channel
- 94: third object slide
- 96: fourth object slide
- 98: second common axis
- 100: third probe slice
- 102: fourth probe slice
- 104: third area of interest
- 106: fourth area of interest
- 108: third treatment spot
- 110: fourth treatment spot
- 112: third underpressure port
- 114: fourth underpressure port

## Claims

1. A method for treating a first probe slice (70) and at least a second probe slice (72) by a laboratory automation device (10), with the first probe slice (70) being arranged on a first object slide (54), with the second probe slice (72) being arranged on a second object slide (56), and with the first and second object slides (54, 56) being arranged on an upper surface (51, 53) of a carrier (50, 52), wherein the upper surface (51, 53) of the carrier (50, 52) defines a plane extending in a first direction (40) and in a second direction (42) perpendicular to the first direction (40), with the laboratory automation device (10) comprising a handling system (15) having a treatment arm (20) and first and second treatment tools (30, 32) movably arranged at the treatment arm (20), the method comprising:
determining positions of a first area of interest (74) of the first probe slice (70) and of a second area of interest (76) of the second probe slice (72) with respect to the first and second directions (40, 42);
generating a handling signal and a movement signal depending on the determined positions of the areas of interest (74, 76);
sending the handling signal to the handling system (15), wherein the handling signal and the handling system (15) are configured such that upon receiving the handling signal the handling system (15) moves the first object slide (54) in the first direction (40) until the first area of interest (74) overlaps the second area of interest (76) in the first direction (40);
sending the movement signal to the handling system (15), wherein the movement signal and the handling system (15) are configured such that upon receiving the movement signal the handling system (15) moves
the treatment arm (20) parallel to the first direction (40) until a first treatment spot (80) of the first treatment tool (30) overlaps the first area of interest (74) in the first direction (40) and a second treatment spot (82) of the second treatment tool (32) overlaps the second area of interest (76) in the first direction (40),
the first treatment tool (30) in a second direction (42) perpendicular to the first direction (40) until the first treatment spot (80) overlaps the first area of interest (74) in the second direction (42), and
the second treatment tool (32) parallel to the second direction (42) until the second treatment spot (82) overlaps the second area of interest (76) in the second direction (42); and
sending a treatment signal to the handling system (15), wherein the treatment signal and the handling system (15) are configured such that upon receiving the treatment signal the handling system (15) treats the first probe slice (70) in the first area of interest (74) by the first treatment tool (30) and the second probe slice (72) in the second area of interest (76) by the second treatment tool (32).

2. The method of claim 1, comprising, before determining the positions of the areas of interest (74, 76):
receiving image data from at least one camera (46), the image data being representative for the positions of the first probe slice (70) on the first object slide (54) and of the second probe slice (72) on the second object slide (56); and
determining the positions of the areas of interest (74, 76) depending on the received image data.

3. The method of claim 2, comprising, before receiving the image data from the at least one camera (46):
sending a capturing signal to the corresponding camera (46), wherein the capturing signal and the corresponding camera (46) are configured such that the corresponding camera (46) takes at least one image of the first probe slice (70) on the first object slide (54) and/or of the second probe slice (72) on the second object slide (56) and that the corresponding camera (46) generates the image data.

4. The method of one of the preceding claims, comprising, after the handling system (15) has moved the first object slide (54) and before sending the movement signal to the handling system (15):
sending a positioning signal to a positioning unit (48) of the laboratory automation device (10), wherein the positioning signal and the positioning unit (48) are configured such that upon receiving the positioning signal the positioning unit (48) moves the carrier (50, 52) from a handling area (47), in which the handling unit system (15) moved the first object slide (54) in the first direction (40), to a treatment area (49), in which the handling system (15) can treat the first and second probe slices (70, 72).

5. The method of one of the preceding claims, wherein
the first and second treatment tools (30, 32) each are lysis, staining or masking tools, and
the handling system (15) treats the first and second probe slices (70, 72) by lysing, staining, or, respectively, masking the first and second probe slices (70, 72) in the corresponding first and second areas of interest (74, 76) by the corresponding lysis, staining, or, respectively, masking tools.

6. The method of one of the preceding claims, wherein
the handling system (15) comprises a handling tool (34) for holding the first object slide (54),
and the handling system (15) and the handling tool (34) are configured such that upon receiving the handling signal the handling tool (34) is moved onto the first object slide (54), an underpressure is generated between the handling tool (34) and the first object slide (54) such that the first object slide (54) is fixed to the handling tool (34) by the underpressure, the first object slide (54) is lifted and moved by the handling tool (34) until the first area of interest (74) overlaps the second area of interest (76) in the first direction (40), and the handling tool (34) releases the first object slide (54) by releasing the underpressure between the handling tool (34) and the first object slide (54).

7. A controller (18) for controlling a laboratory automation device (10), the controller (18) comprising a memory for storing coordinates and a processor communicatively coupled to the memory and being configured for carrying out the method in accordance with one of the preceding claims.

8. A laboratory automation device (10) for treating a first probe slice (70) and at least a second probe slice (72), with the first probe slice (70) being arranged on a first object slide (54), with the second probe slice (72) being arranged on a second object slide (56), and with the first and second object slides (54, 56) being arranged on an upper surface (51, 53) of a carrier (50, 52), wherein the upper surface (51, 53) of the carrier (50, 52) defines a plane extending in a first direction (40) and in a second direction (42) perpendicular to the first direction (40), the laboratory automation device (10) comprising:
a controller (18) in accordance with claim 7;
a handling system (15) having a treatment arm (20) and first and second treatment tools (30, 32) movably arranged next to each other at the treatment arm (20), and being configured to move the first object slide (54) in the first direction (40) until the first area of interest (74) overlaps the second area of interest (76) in the first direction (40) upon receiving a handling signal from the controller (18), and to
move the treatment arm (20) parallel to the first direction (40) until a first treatment spot (80) of the first treatment tool (30) overlaps the first area of interest (74) in the first direction (40) and a second treatment spot (82) of the second treatment tool (32) overlaps the second area of interest (76) in the first direction (40),
move the first treatment tool (30) in a second direction (42) perpendicular to the first direction (40) until the first treatment spot (80) overlaps the first area of interest (74) in the second direction (42), and
move the second treatment tool (32) parallel to the second direction (42) until the second treatment spot (82) overlaps the second area of interest (76) in the second direction (42) upon receiving a movement signal from the controller (18);
and to
treat the first probe slice (70) in the first area of interest (74) by the first treatment tool (30) and the second probe slice (72) in the second area of interest (76) by the second treatment tool (32) upon receiving a treatment signal from the controller (18).

9. The laboratory automation device (10) in accordance with claim 8, wherein
the handling system (15) comprises a handling unit (16) and a treatment unit (14),
the handling unit (16) is configured for moving the first object slide (54) upon receiving the handling signal from the controller (18), and
the treatment unit (14) comprises the treatment arm (20) and is configured for moving the treatment arm (20) and the first and second treatment tools (30, 32) upon receiving the movement signal from the controller (18) and for treating the first probe slice (70) and the second probe slice (72) upon receiving the treatment signal from the controller (18).

10. The laboratory automation device (10) in accordance with one of claims 8 or 9, comprising:
at least one camera (46) being communicatively coupled to the controller (18) and being configured for taking at least one image of the first probe slice (70) on the first object slide (54) and/or of the second probe slice (72) on the second object slide (56), for generating corresponding image data, and for transferring the image data to the controller (18).

11. The laboratory automation device (10) in accordance with one of claims 8 to 10, comprising:
a positioning unit (48) being communicatively coupled to the controller (18) and being configured to move the carrier (50, 52) from a handling area (47), in which the handling unit (16) has moved the first object slide (54) in the first direction (40), to a treatment area (49), in which the treatment unit (14) can treat the first and second probe slices (70, 72), upon receiving a positioning signal from the controller (18).

12. The laboratory automation device (10) in accordance with one of claims 8 to 11, comprising:
an underpressure pump (64) for generating an underpressure, wherein the carrier (50) comprises a first underpressure port (62) on which the first object slide (54) is arranged, a second underpressure port (63) on which the second object slide (56) is arranged, a first underpressure terminal (58) coupled to the first underpressure port (62) and to the underpressure pump (64), and a second underpressure terminal (59) coupled to the second underpressure port (63) and to the underpressure pump (64).

13. The laboratory automation device (10) in accordance with one of claims 8 to 12, wherein a third object slide (94) with a third probe slice (100) thereon and a fourth object slide (96) with a fourth probe slice (102) thereon are arranged on the carrier (50), with the third probe slice (94) comprising a third area of interest (104) and with the fourth probe slice (96) comprising a fourth area of interest (106), the laboratory automation device (10) comprising:
a first treatment tool row (84) extending along the second direction (42) at the treatment arm (20) and comprising the first and second treatment tools (30, 32); and
a second treatment tool row (86) extending along the second direction (42) at the treatment arm (20) parallel and at a distance to the first treatment tool row (84) and comprising a third treatment tool (90) and a fourth treatment tool (92), wherein the handling system (15) is configured for treating the third probe slice (100) in the third area of interest (104) by the third treatment tool (90) and the fourth probe slice (102) in the fourth area of interest (106) by the fourth treatment tool (92) upon receiving the treatment signal from the controller (18).

14. A computer program for simultaneously treating a first probe slice (70) and at least a second probe slice (72) by a laboratory automation device (10), the computer program, when being executed by a controller (18) of the laboratory automation device (10), being adapted to carry out the steps of the method of one of claims 1 to 7.

15. A computer-readable medium, in which a computer program according to claim 14 is stored.
